# EUROPEAN PATENT SPECIFICATION

(11) **EP 4 642 219 B1**
(45) Date of publication and mention of the grant of the patent: **28.10.2026**
(21) Application number: 23847901.8
(22) Date of filing: 27.12.2023
(51) Int. Cl.: A01G 3/04, A01G 3/053, A01D 34/135

(54) **A CUTTING APPARATUS SUITABLE FOR CUTTING WILD SHRUBS, BRANCHES AND/OR BUSHES**
SCHNEIDVORRICHTUNG ZUM SCHNEIDEN VON WILDSTRÄUCHERN, ZWEIGEN UND/ODER STRÄUCHERN
APPAREIL DE COUPE CONÇU POUR COUPER DES ARBUSTES, DES BRANCHES ET/OU DES BUISSONS SAUVAGES

(30) Priority: 27.12.2022 PT 2022118436
(43) Date of publication of application: 05.11.2025
(73) Proprietor: Fravizel - Equipamentos Metalomecânicos, S.A., 2025-999 Alcanede (PT)
(72) Inventor: VICENTE FRAZÃO, Eliseu Manuel, 2025-999 Alcanede (PT)
(74) Representative: do Nascimento Gomes, Rui
(86) International application number: PCT/IB2023/063283
(87) International publication number: WO 2024/141947

(56) References cited:
- EP-A1- 3 610 718
- EP-A1- 4 000 368
- US-A1- 2008 134 521
- US-B2- 6 910 276

## Description

### FIELD OF THE DISCLOSURE

The solution of the present disclosure is particularly suitable for the cutting of bushes and shrubs - shrubbery - wildly growing, typically in between tree lines, thus in the path running down the middle of tree lines.

### PRIOR ART

Solutions exist in the art for providing the cut of bushes and shrubs, through the continuous relative movement of two blades with cutting projections, producing a scissor effect formed the movement projections of the blades. When a projection of a first blade intersects a projection of the second blade, a part of the shrub provided in between is cut.

These solutions are commonly handheld, although they may be of a larger dimension and thereby be coupled to larger structures such as a vehicle.

US patent application with publication no. US 2008/0134521 is an example of a typical working handheld tool, suitable for trimming garden trees and plants.

European patent application with publication no. EP 4000368 also discloses a similar solution for softer solutions, to trim branches and leaves.

These solutions are based on an efficient a reciprocating movement imposed in an eccentric element by means of a motor, this eccentric element providing the relative movement of the blades and thereby the cutting action. The movement also provides a compact solution.

These known solutions, despite using the efficient reciprocating action to provide the cutting, do not provide a fully robust solution for the cutting of larger trunks or branches, thereby leading to either an unsuitability for such application or a swift wear. The present solution innovatively overcomes such issues.

### SUMMARY OF THE DISCLOSURE

The present disclosure comprises a cutting apparatus. The cutting apparatus of the present disclosure is suitable for the cutting of shrubs, branches and/or bushes. The cutting apparatus may comprise i) a pair of blades arranged to overlap one another, each of the pair of blades
having a plurality of cutting edges suitable for cutting a shrub, branch and/or bush and
being movable in a reciprocating manner along a longitudinal direction, wherein the pair of blades is further configured to provide cutting of a shrub, branch and/or bush provided between a cutting edge of one of the blades and a cutting edge of the other blade during such reciprocating movement, ii) a pair of non-movable support plates, each of the support plates being configured to support the blades along the said longitudinal direction, the blades being arranged between the support plates, and iii) a pair of wear protection plates, each of the wear protection plates being provided between one of the blades and the corresponding support plate,
wherein the protection plates are configured to protect the corresponding blade from abrasion resulting from the reciprocating movement.

Thus, the cutting apparatus of the present disclosure consists of a compact and efficient of solution, while resorting to a reciprocating movement of blades. In addition, through the provision of wear protection plates arranged between support plates and blades, the present solution reduces the effects of wear and tear in the blades, which would otherwise result from the cutting of thick elements existent in shrubbery.

The protection plates may be composed of a plastic such as a plastic material - e.g., an engineering plastic -, a bronze alloy or sintered steel.

The blades may be metallic.

The metal may comprise steel. It may be entirely composed of steel.

The blades, the support plates and the wear protection plates may comprise more than one through holes respectively arranged horizontally along each blade, support plate and wear protection plate, such through holes being aligned between the blades, the support plates and the wear protection plates such that fixing means, such as a screw or bolt, are providable along the through holes,
wherein the cutting apparatus further comprises a spacer providable at least in the through holes of the blades and wear protection plates, the spacer being configured such that a blade is adjacently provided to a wear protection plate and that a support plate is adjacently provided to a to a wear protection plate.

Each spacer may be composed of a plastic such as an engineering plastic, a bronze alloy or sintered steel.

The cutting apparatus may further comprise screws and/or bolts provided through the through holes and thereby to tightly couple the assembly formed blades, support plates and wear protection plates along a direction perpendicular to the longitudinal direction and to a main area of the plates.

The cutting apparatus may further comprise driving means, the driving means being configured to enable a movement which causes each of the blades to move in a reciprocating manner along the longitudinal direction.

The driving means may comprise a pair of eccentric elements, each of the eccentric elements being longitudinally aligned with one of the blades, the eccentric elements being jointly coupled and misaligned such that, when in movement, the misalignment of the eccentric elements causes the blades to move in a reciprocating manner along the longitudinal direction.

Each of the eccentric elements may comprise an axle forming a protrusion which projects perpendicularly to an eccentric area of the respective eccentric element, wherein movement is transmittable to the eccentric elements through one of such axles.

The driving means may also comprise a motor.

The motor may be configured to transmit rotation movement to one of the axles of the eccentric elements and thereby cause the blades to move in a reciprocating manner along the longitudinal direction.

Each axle may have a circular cross section with an area which corresponds to at least 25 % of the eccentric area of the respective eccentric element.

The present disclosure also comprises the use of the cutting apparatus for the cutting of one or more shrubs, branches and/or bushes. Such shrubs, branches and/or bushes may be provided between tree lines.

### DESCRIPTION OF FIGURES

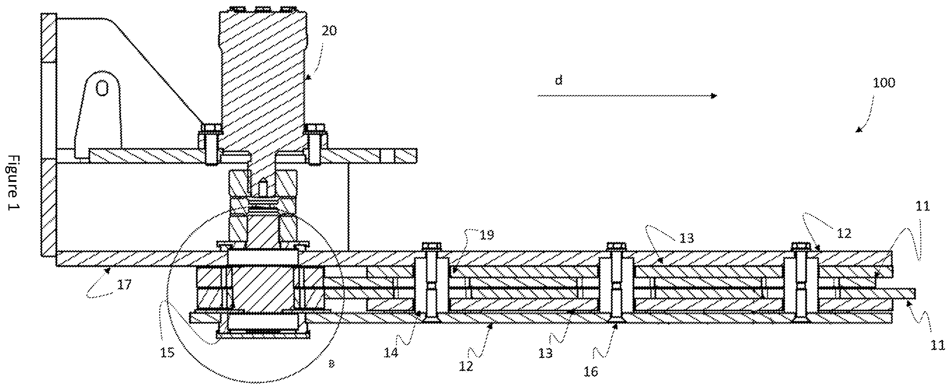

Figure 1 - cross-section representation of a cutting apparatus (100) according to the present disclosure. It comprises a pair of blades (11) arranged to overlap one another, each of the pair of blades (11) having a plurality of cutting edges (18) (not shown in this figure) suitable for cutting a shrub, branch and/or bush and being movable in a reciprocating manner along a longitudinal direction (d). The cutting apparatus further comprises a pair of non-movable support plates (12), each of the support plates (12) being configured to support the blades (11) along the said longitudinal direction (d), as shown in the figure, and the blades (11) are arranged between the support plates (12). Moreover, a pair of wear protection plates (13) are provided between one of the blades (11) and a corresponding support plate (11). Through holes (19) are provided in the blades (11), support plates (12) and protection plates (13) and arranged in an aligned manner. Screws and bolts (16) are provided in the through holes (19), holding the assembly tight. In addition, the eccentric elements are represented (15). Furthermore, the structure (17) of the cutting apparatus (100) is represented, and one of the support plates (12) is coupled to such structure.
Figure 2 - perspective external representation of the cutting apparatus (100) of Figure 1, in which cutting edges (18) of the blades (11) are represented.
Figure 3 - representation of a portion of the driving means of the cutting apparatus (100), corresponding to the portion B of Figure 1, providing an arrangement of the eccentric elements (15).
Figure 4 - representation of a blade according to the present disclosure, with its cutting edges (18) and through holes (19). On the right side an element which is couplable to an eccentric element (151) or corresponding axle (152) (not shown).
Figure 5 - representation of eccentric elements (15) according to the present disclosure, two jointly coupled eccentric elements (151) and corresponding axles (152).

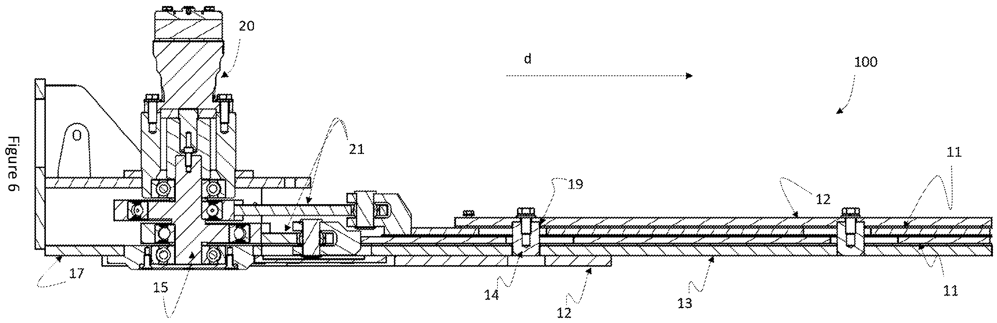

Figure 6 - representation of a second embodiment according to the present disclosure, in which each of the eccentric elements (15) is coupled to a corresponding blade (11) by means of a corresponding connecting rod (21) of a pair of connecting rods (21). In such second embodiment, the eccentric elements (15) are thus not directly coupled to the blades (11), but indirectly, through the connecting rods (21). In addition, a top blade (11), provided in the figure on top, is provided in a directly adjacent manner below a top support plate (12), provided on top in the figure (thus the other support plate being a bottom support plate, in the figure). The top support plate (12) thus operates as support plate and as (top) protection plate, which in such embodiment is not provided. The top support plate (12) thus extends along all the length of the corresponding top blade (11).

### DETAILED DESCRIPTION

General aspects of the present disclosure are described in the Summary of the disclosure. Further aspects are subsequently described.

The cutting apparatus of the present disclosure is suitable for the cutting of shrubs, branches and/or bushes, which commonly grow wildly in between two tree lines.

Tree lines may be defined as lines along which trees have been planted and grow. The space in between two parallel tree lines is particularly prone for the wild growing of shrubs, bushes and branches, some slightly higher than the other.

The cutting of the cutting apparatus is provided by a reciprocating movement of the blades. The blades are arranged to overlap one another, such a shrub, branch and/or bush provided between a cutting edge of one of the blades and a cutting edge of the other blade during such reciprocating movement is cut. Since the blades are provided between wear protection plates and support plates, at least part of the cutting edges of the blades extend beyond an area covered by the wear protection plates and support plates. The area covered by the wear protection plates may be the same or substantially the same as that covered by the support plates.

Each blade, in its reciprocating movement, has a course, which corresponds to an extension along which the blade moves. The course of the blades is identical.

While moving along the respective course, each blade moves between a first extreme position and a second extreme position. When one blade is provided in a first extreme position, the other blade is provided in the second extreme position, and the other way around.

It may be that when one blade is provided in a first extreme position and the other blade is provided in the second extreme position, the extremities of cutting edges of the first blade are provided halfway between the extremities of cutting edges of the other blade.

The blades have cutting edges extending along two opposite senses of a direction perpendicular to the longitudinal direction.

The blades may be substantially flat, as provided in the Figures.

The direction perpendicular to the longitudinal direction along which cutting edges are formed is provided within the substantially flat surface of the blades. It may thus be referred that the cutting edges are provided on two opposite sides of each blade.

The Figures present a possible implementation of the solution of the present disclosure with blades and corresponding cutting edges arranged in such manner.

Each blade may comprise at least 5 cutting edges provided along one of the senses, thereby comprising at least 10 edges in total. Such a configuration is provided in the Figures, where the blades comprise 14 cutting edges, 7 edges being provided on each side of the blades.

The pair of blades is configured to provide cutting of a shrub, branch and/or bush provided between a cutting edge of one of the blades and a cutting edge of the other blade during such reciprocating movement. The configuration provided in the figures represents this movement.

The fixation of the blades to a structure of the apparatus is provided by a pair of non-movable support plates. The support plates thus are jointly fixed to a structure of the apparatus, and such structure may include an enclosure.

Such structure may further include means for a person to hold the apparatus, handling and thus using it to cut shrubs, branches and/or bushes by means of the reciprocating blades. As provided in the figures (e.g. Figure 1), the blades are arranged between the support plates.

The apparatus further comprises a pair of wear protection plates. As provided in the figures, each of the wear protection plates is arranged between one of the blades and the corresponding support plate.

The protection plates may be composed of composed of a plastic material - e.g., an engineering plastic -, a bronze alloy or sintered steel. The provision of the wear protection plates between one of the blades and the corresponding support plate and by comprising a said material, the wear protection plates enable the reduction of the wear and tear of the overall structure, in particular of the blades, which otherwise would scrape against the respective support plates. This wear and tear effect is particularly relevant in the cutting of thick elements existent in shrubs, bushes and branches, in particular those growing in between tree lines.

The blades may be metallic. The metal may comprise steel. It may be entirely composed of steel.

The blades, the support plates and the wear protection plates may comprise more than one through holes respectively arranged horizontally along each blade, support plate and wear protection plate, such through holes being aligned between the blades, the support plates and the wear protection plates such that fixing means, such as a screw or bolt, are providable along the through holes,
wherein the cutting apparatus further comprises a spacer providable at least in the through holes of the blades and wear protection plates, the spacer being configured such that a blade is adjacently provided to a wear protection plate and that a support plate is adjacently provided to a to a wear protection plate.

A particularly suitable configuration of through holes and spacers is presented in the figures (e.g., Figure 1). The provision of a spacer allows to place the strain which maintains plates and blades together in an element other than the blades and the plates.

Even more when the spacer is a resilient element, such as a plastic spacer.

The cutting apparatus may further comprise screws and/or bolts provided through the through holes and thereby to tightly couple the assembly formed blades, support plates and wear protection plates along a direction perpendicular to the longitudinal direction and to a main area of the plates. When provided, the screws and/or bolts tightly couple the assembly formed blades, support plates and wear protection plates, and thereby highlight the reduction of wear and tear provided by the wear protection plates.

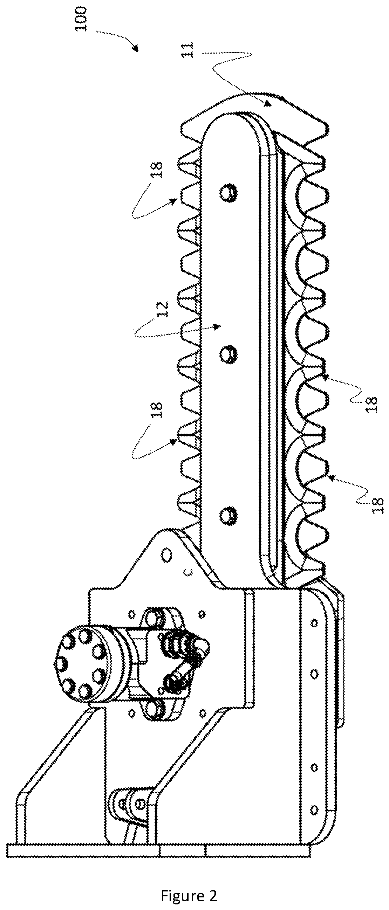

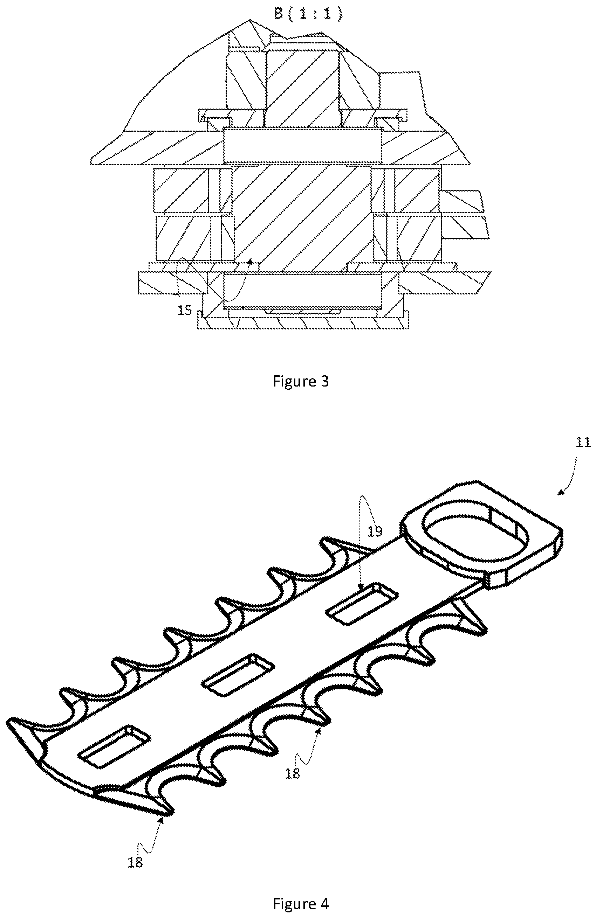

The cutting apparatus may further comprise driving means, the driving means being configured to enable a movement which causes each of the blades to move in a reciprocating manner along the longitudinal direction. The driving means may also comprise a motor. The motor may be provided within an enclosure which is part of the structure of the apparatus. Such configuration is provided in the figures (e.g., Figures 1-3).

The driving means may comprise a pair of eccentric elements, each of the eccentric elements being longitudinally aligned with one of the blades, the eccentric elements being jointly coupled and misaligned such that, when in movement, the misalignment of the eccentric elements causes the blades to move in a reciprocating manner along the longitudinal direction. The eccentric elements may be movable by means of the motor.

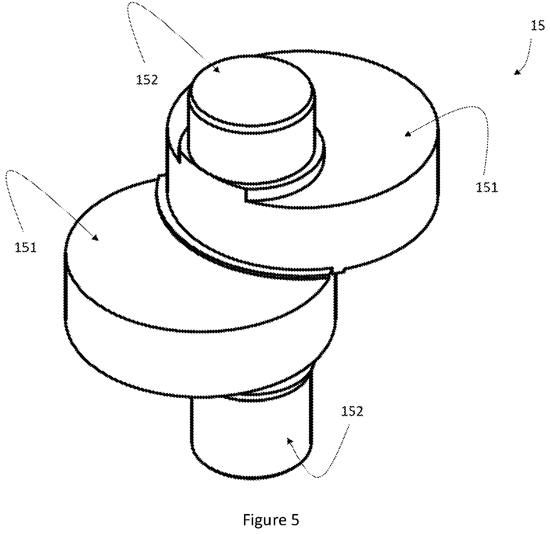

Each of the eccentric elements may comprise an axle forming a protrusion which projects perpendicularly to an eccentric area of the respective eccentric element, wherein movement is transmittable to the eccentric elements through one of such axles. One of the axles may be directly or indirectly movable by the motor. The eccentric elements are represented in the figures (e.g., Figure 5), showing how their rotation movement leads to a transmittal of movement to the blades in a reciprocating manner. The axles, by protruding from the eccentric elements, lead to an increase in the binary allowed by the overall assembly of eccentric elements and axles, and thereby to a higher suitability for the cutting of wild growing shrubs or bushes and branches.

Particularly, the motor may be configured to transmit rotation movement to one of the axles of the eccentric elements and thereby cause the blades to move in a reciprocating manner along the longitudinal direction.

Each axle may have a circular cross section with an area which corresponds to at least 25 % of the eccentric area of the respective eccentric element. This relation provides an increased robustness.

Moreover, and according to a first embodiment of the present disclosure, each of eccentric elements is directly coupled to a corresponding blade.

Alternatively, and according to a second embodiment of the present disclosure, the driving means may further comprise a pair of connecting rods, each of the connecting rods being coupled to an eccentric element and a corresponding blade such that, when in movement, the misalignment of the connecting rods causes the blades to move in a reciprocating manner along the longitudinal direction by means of the connecting rods.

In the second embodiment, the eccentric elements are thus not directly coupled to the blades (as per the first embodiment), but indirectly, through the connecting rods. In addition, a top blade, provided on top in figure 6, may be provided in a directly adjacent manner to a top support plate, provided on top in figure 6. The top support plate thus operates as support plate and as (top) protection plate, which in such embodiment is not provided. The top support plate thus extends along all the length of the corresponding top blade.

As will be clear to one skilled in the art, the present disclosure should not be limited to the embodiments described herein, and a number of changes are possible which remain within the scope of the present disclosure.

Of course, the preferred embodiments shown above are combinable, in the different possible forms, being herein avoided the repetition all such combinations.

## Claims

1. A cutting apparatus (100) wherein it comprises i) a pair of blades (11) arranged to overlap one another, each of the pair of blades (11)
having a plurality of cutting edges (18) suitable for cutting a shrub, branch and/or bush and
being movable in a reciprocating manner along a longitudinal direction, wherein the pair of blades (11) is further configured to provide cutting of a shrub, branch and/or bush provided between a cutting edge (18) of one of the blades (11) and a cutting edge (18) of the other blade during such reciprocating movement, ii) a pair of non-movable support plates (12), each of the support plates (12) being configured to support the blades (11) along the said longitudinal direction, the blades (11) being arranged between the support plates (12), and further **characterised in that** iii) a pair of wear protection plates (13, each of the wear protection plates (13) being provided between one of the blades (11) and the corresponding support plate,
wherein the protection plates (13) are configured to protect the corresponding blade from abrasion resulting from the reciprocating movement.

2. A cutting apparatus (100) according to the previous claim wherein the protection plates (13) are composed of a plastic material, a bronze alloy or sintered steel.

3. A cutting apparatus (100) according to the previous claim wherein the plastic material is an engineering plastic.

4. A cutting apparatus (100) according to any of the preceding claims wherein the blades (11) are metallic, optionally the metal of the metallic blades (11) comprising steel, optionally being entirely composed of steel.

5. A cutting apparatus (100) according to any of the preceding claims wherein the blades (11), the support plates (12) and the wear protection plates (13) comprise more than one through holes (19) respectively arranged horizontally along each blade, support plate and wear protection plate, such through holes (19) being aligned between the blades (11), the support plates (12) and the wear protection plates (13) such that fixing means, such as a screw or bolt (16), are providable along the through holes (19), wherein the cutting apparatus (100) further comprises a spacer providable at least in the through holes (19) of the blades (11) and wear protection plates (13), the spacer being configured such that a blade is adjacently provided to a wear protection plate and that a support plate is adjacently provided to a to a wear protection plate.

6. A cutting apparatus (100) according the previous claim wherein each spacer comprises a plastic material, optionally being entirely composed of a plastic material.

7. A cutting apparatus (100) according to any of the claims 5-6 wherein it further comprises screws and/or bolts (16) provided through the through holes (19) and thereby to tightly couple the assembly formed blades (11), support plates (12) and wear protection plates (13) along a direction perpendicular to the longitudinal direction and to a main area of the plates.

8. A cutting apparatus (100) according to any of the preceding claims wherein it further comprises driving means, the driving means being configured to enable a movement which causes each of the blades (11) to move in a reciprocating manner along the longitudinal direction.

9. A cutting apparatus (100) according to the previous claim wherein the driving means comprise a pair of eccentric elements (15), each of the eccentric elements (15) being longitudinally aligned with one of the blades (11), the eccentric elements (15) being jointly coupled (151) and misaligned such that, when in movement, the misalignment of the eccentric elements (15) causes the blades (11) to move in a reciprocating manner along the longitudinal direction.

10. A cutting apparatus (100) according to the previous claim wherein each of the eccentric elements (15) comprises an axle (152) forming a protrusion which projects perpendicularly to an eccentric area of the respective eccentric element, wherein movement is transmittable to the eccentric elements (15) through one of such axles (152).

11. A cutting apparatus (100) according to the previous claim wherein each axle (152) has a circular cross section with an area which corresponds to at least 25 % of the eccentric area of the respective eccentric element.

12. A cutting apparatus (100) according to any of the claims 10-11 wherein each of eccentric elements (15) is directly coupled to a corresponding blade.

13. A cutting apparatus (100) according to any of the claims 10-11 wherein the driving means further comprise a pair of connecting rods (21), each of the connecting rods (21) being coupled to an eccentric element (15) and a corresponding blade such that, when in movement, the misalignment of the connecting rods (21) causes the blades (11) to move in a reciprocating manner along the longitudinal direction by means of the connecting rods (21).

14. A cutting apparatus according to claim 8 wherein the driving means comprise a motor configured to transmit rotation movement to one of the axles (152) of the eccentric elements (15) and thereby cause the blades (11) to move in a reciprocating manner along the longitudinal direction.

15. Use of the cutting apparatus (100) of any of the preceding claims for the cutting of one or more shrubs, branches and/or bushes, wherein optionally the one or more shrubs, branches and/or bushes are provided between tree lines.

## Patentansprüche

1. Schneidvorrichtung (100)**,** die Folgendes umfasst: i) ein Paar Klingen (11), die so angeordnet sind, dass sie sich überlappen, wobei jede der beiden Klingen (11)
über mehrere Schneidkanten (18) verfügt, die zum Schneiden eines Strauchs, eines Astes und/oder eines Busches geeignet sind, und
entlang einer Längsrichtung hin- und herbewegbar ist,
wobei das Paar Klingen (11) ferner so ausgebildet ist, dass es während einer solchen Hin-und Herbewegung das Schneiden eines Strauchs, eines Astes und/oder eines Busches ermöglicht, der zwischen einer Schneidkante (18) einer der Klingen (11) und einer Schneidkante (18) der anderen Klinge bereitgestellt ist, ii) ein Paar unbeweglicher Trägerplatten (12), wobei jede der Trägerplatten (12) so ausgebildet ist, dass sie die Klingen (11) entlang der genannten Längsrichtung stützt, wobei die Klingen (11) zwischen den Trägerplatten (12) angeordnet sind, und ferner **dadurch gekennzeichnet, dass** iii) ein Paar Verschleißschutzplatten (13), wobei jede der Verschleißschutzplatten (13) zwischen einer der Klingen (11) und der entsprechenden Trägerplatte vorgesehen ist,
wobei die Schutzplatten (13) so ausgebildet sind, dass sie die entsprechende Klinge vor Abrieb infolge der Hin- und Herbewegung schützen.

2. Schneidvorrichtung (100) nach dem vorstehenden Anspruch, wobei die Schutzplatten (13) aus einem Kunststoff, einer Bronzelegierung oder gesintertem Stahl bestehen.

3. Schneidvorrichtung (100) nach dem vorstehenden Anspruch, wobei der Kunststoff ein technischer Kunststoff ist.

4. Schneidvorrichtung (100) nach einem der vorstehenden Ansprüche, wobei die Klingen (11) metallisch sind, gegebenenfalls das Metall der metallischen Klingen (11) Stahl umfasst, wobei sie gegebenenfalls vollständig aus Stahl bestehen.

5. Schneidvorrichtung (100) nach einem der vorstehenden Ansprüche, wobei die Klingen (11), die Trägerplatten (12) und die Verschleißschutzplatten (13) jeweils mehr als ein Durchgangsloch (19) aufweisen, die horizontal entlang jeder Klinge, jeder Trägerplatte und jeder Verschleißschutzplatte angeordnet sind, wobei diese Durchgangslöcher (19) zwischen den Klingen (11), den Trägerplatten (12) und den Verschleißschutzplatten (13) so ausgerichtet sind, dass Befestigungsmittel, wie beispielsweise eine Schraube oder ein Bolzen (16), entlang der Durchgangslöcher (19) bereitstellbar sind,
wobei die Schneidvorrichtung (100) ferner einen Abstandhalter umfasst, der zumindest in den Durchgangslöchern (19) der Klingen (11) und der Verschleißschutzplatten (13) bereitstellbar ist, wobei der Abstandhalter so ausgebildet ist, dass eine Klinge benachbart zu einer Verschleißschutzplatte und eine Trägerplatte benachbart zu einer Verschleißschutzplatte bereitgestellt ist.

6. Schneidvorrichtung (100) nach dem vorstehenden Anspruch, wobei jeder Abstandshalter ein Kunststoffmaterial umfasst und gegebenenfalls vollständig aus einem Kunststoffmaterial besteht.

7. Schneidvorrichtung (100) nach einem der Ansprüche 5-6, wobei sie ferner Schrauben und/oder Bolzen (16) umfasst, die durch die Durchgangslöcher (19) hindurchgeführt sind und dadurch die aus Klingen (11), Trägerplatten (12) und Verschleißschutzplatten (13) gebildete Baugruppe entlang einer Richtung senkrecht zur Längsrichtung und zu einem Hauptbereich der Platten fest miteinander verbinden.

8. Schneidvorrichtung (100) nach einem der vorstehenden Ansprüche, wobei sie ferner Antriebsmittel umfasst, wobei die Antriebsmittel so konfiguriert sind, dass sie eine Bewegung ermöglichen, die bewirkt, dass sich jede der Klingen (11) in Längsrichtung hinund herbewegt.

9. Schneidvorrichtung (100) nach dem vorstehenden Anspruch, wobei die Antriebsmittel ein Paar Exzenterelemente (15) umfassen, wobei jedes der Exzenterelemente (15) in Längsrichtung auf einer der Klingen (11) ausgerichtet ist, wobei die Exzenterelemente (15) miteinander gekoppelt (151) und derart versetzt angeordnet sind, dass bei Bewegung der Versatz der Exzenterelemente (15) bewirkt, dass sich die Klingen (11) in Längsrichtung hin- und herbewegen.

10. Schneidvorrichtung (100) nach dem vorstehenden Anspruch, wobei jedes der Exzenterelemente (15) eine Achse (152) umfasst, die einen Vorsprung bildet, der senkrecht zu einem exzentrischen Bereich des jeweiligen Exzenterelements vorsteht, wobei die Bewegung über eine dieser Achsen (152) auf die Exzenterelemente (15) übertragbar ist.

11. Schneidvorrichtung (100) nach dem vorstehenden Anspruch, wobei jede Achse (152) einen kreisförmigen Querschnitt mit einer Fläche aufweist, die mindestens 25 % der Exzenterfläche des jeweiligen Exzenterelements entspricht.

12. Schneidvorrichtung (100) nach einem der Ansprüche 10-11, wobei jedes der Exzenterelemente (15) direkt mit einer entsprechenden Klinge gekoppelt ist.

13. Schneidvorrichtung (100) nach einem der Ansprüche 10-11, wobei die Antriebsmittel ferner ein Paar von Verbindungsstangen (21) umfassen, wobei jede der Verbindungsstangen (21) mit einem Exzenterelement (15) und einer entsprechenden Klinge gekoppelt ist, sodass bei Bewegung die Versetzung der Verbindungsstangen (21) bewirkt, dass sich die Klingen (11) mittels der Verbindungsstangen (21) in Längsrichtung hin- und herbewegen.

14. Schneidvorrichtung nach Anspruch 8, wobei die Antriebsmittel einen Motor umfasst, der so ausgelegt ist, dass er eine Drehbewegung auf eine der Achsen (152) der Exzenterelemente (15) überträgt und dadurch bewirkt, dass sich die Klingen (11) in Längsrichtung hin- und herbewegen.

15. Verwendung der Schneidvorrichtung (100) nach einem der vorstehenden Ansprüche zum Schneiden eines oder mehrerer Sträucher, Äste und/oder Büsche, wobei die einen oder mehreren Sträucher, Äste und/oder Büsche optional zwischen Baumreihen bereitgestellt sind.

## Revendications

1. Appareil de coupe (100), **lequel** comprend : i) une paire de lames (11) disposées de manière à se chevaucher l'une l'autre, chacune des lames de la paire (11)
présentant une pluralité d'arêtes de coupe (18) adaptées à la coupe d'arbustes, de branches et/ou de buissons et
pouvant effectuer un mouvement alternatif suivant une direction longitudinale,
dans lequel la paire de lames (11) est en outre configurée pour couper un arbuste, une branche et/ou un buisson disposé entre une arête de coupe (18) de l'une des lames (11) et une arête de coupe (18) de l'autre lame lors dudit mouvement alternatif, ii) une paire de plaques de support (12)
non mobiles, chacune des plaques de support (12) étant configurée pour supporter les lames (11) le long de ladite direction longitudinale, les lames (11) étant disposées entre les plaques de support (12), et aussi **caractérisé par** iii) une paire de plaques de protection contre l'usure (13), chacune des plaques de protection contre l'usure (13) étant disposée entre l'une des lames (11) et la plaque de support correspondante,
dans lequel les plaques de protection (13) sont configurées pour protéger la lame correspondante de l'abrasion résultant du mouvement alternatif.

2. Appareil de coupe (100) selon la revendication précédente, dans lequel les plaques de protection (13) sont constituées d'un matériau plastique, d'un alliage de bronze ou d'acier fritté.

3. Appareil de coupe (100) selon la revendication précédente, dans lequel le matériau plastique est un plastique technique.

4. Appareil de coupe (100) selon l'une quelconque des revendications précédentes, dans lequel les lames (11) sont métalliques, le métal des lames (11) métalliques pouvant éventuellement comprendre de l'acier, et pouvant éventuellement être entièrement constitué d'acier.

5. Appareil de coupe (100) selon l'une quelconque des revendications précédentes, dans lequel les lames (11), les plaques de support (12) et les plaques de protection contre l'usure (13) comportent plus d'un trou traversant (19) respectivement disposés horizontalement le long de chaque lame, plaque de support et plaque de protection contre l'usure, ces trous traversants (19) étant alignés entre les lames (11), les plaques de support (12) et les plaques de protection contre l'usure (13) de telle sorte que des moyens de fixation, tels qu'une vis ou un boulon (16) puissent être mis en place le long des trous traversants (19),
dans lequel l'appareil de coupe (100) comprend en outre une entretoise pouvant être placée au moins dans les trous traversants (19) des lames (11) et des plaques de protection contre l'usure (13), l'entretoise étant configurée de telle sorte qu'une lame soit disposée de manière adjacente à une plaque de protection contre l'usure et qu'une plaque de support soit disposée de manière adjacente à une plaque de protection contre l'usure.

6. Appareil de coupe (100) selon la revendication précédente, dans lequel chaque entretoise est constituée d'un matériau plastique, pouvant éventuellement être entièrement composée d'un matériau plastique.

7. Appareil de coupe (100) selon l'une quelconque des revendications 5 à 6, lequel comprend en outre des vis et/ou des boulons (16) disposés à travers les trous traversants (19) afin de solidariser fermement l'ensemble formé par les lames (11), les plaques de support (12) et les plaques de protection contre l'usure (13) suivant une direction perpendiculaire à la direction longitudinale et à une zone principale des plaques.

8. Appareil de coupe (100) selon l'une quelconque des revendications précédentes, lequel comprend en outre des moyens d'entraînement, lesdits moyens d'entraînement étant configurés pour permettre un mouvement qui entraîne chacune des lames (11) dans un mouvement alternatif suivant la direction longitudinale.

9. Appareil de coupe (100) selon la revendication précédente, dans lequel les moyens d'entraînement comprennent une paire d'éléments excentriques (15), chacun des éléments excentriques (15) étant aligné longitudinalement avec l'une des lames (11), les éléments excentriques (15) étant couplés conjointement (151) et désalignés de telle sorte que, lors de leur mouvement, le désalignement des éléments excentriques (15) entraîne les lames (11) dans un mouvement alternatif suivant la direction longitudinale.

10. Appareil de coupe (100) selon la revendication précédente, dans lequel chacun des éléments excentriques (15) comprend un axe (152) formant une saillie qui s'étend perpendiculairement à une zone excentrique de l'élément excentrique respectif, le mouvement pouvant être transmis aux éléments excentriques (15) par l'intermédiaire de l'un desdits axes (152).

11. Appareil de coupe (100) selon la revendication précédente, dans lequel chaque axe (152) présente une section transversale circulaire dont l'aire correspond à au moins 25% de l'aire de la zone excentrique de l'élément excentrique respectif.

12. Appareil de coupe (100) selon l'une quelconque des revendications 10 à 11, dans lequel chacun des éléments excentriques (15) est directement couplé à une lame correspondante.

13. Appareil de coupe (100) selon l'une quelconque des revendications 10 à 11, dans lequel les moyens d'entraînement comprennent en outre une paire de bielles (21), chacune des bielles (21) étant couplée à un élément excentrique (15) et à une lame correspondante, de telle sorte que, lors de leur mouvement, le désalignement des bielles (21) entraîne les lames (11) dans un mouvement alternatif suivant la direction longitudinale par l'intermédiaire des bielles (21).

14. Appareil de coupe selon la revendication 8, dans lequel les moyens d'entraînement comprennent un moteur configuré pour transmettre un mouvement de rotation à l'un des axes (152) des éléments excentriques (15) et entraîner ainsi les lames (11) dans un mouvement alternatif suivant la direction longitudinale.

15. Utilisation de l'appareil de coupe (100) selon l'une quelconque des revendications précédentes pour la coupe d'un ou plusieurs arbustes, branches et/ou buissons, où éventuellement l'un ou plusieurs arbustes, branches et/ou buissons sont disposés entre des rangées d'arbres.
